# EUROPÄISCHE PATENTSCHRIFT

(11) **EP 1 270 619 B1**
(45) Veröffentlichungstag und Bekanntmachung des Hinweises auf die Patenterteilung: **22.07.2015**
(21) Anmeldenummer: 02012427.7
(22) Anmeldetag: 10.06.2002
(51) Int. Cl.: C08F 220/14, C08F 220/28, C08L 53/00, C09D 153/00, C08L 33/04, C09D 133/04, C09D 4/06

(54) **Wässrige Sekundärdispersionen**
Aqueous secondary dispersions
Dispersions aqueuses secondaires

(30) Priorität: 21.06.2001 DE 10129854
(43) Veröffentlichungstag der Anmeldung: 02.01.2003
(73) Patentinhaber: Bayer Intellectual Property GmbH, 40789 Monheim (DE)
(72) Erfinder: Probst, Joachim, Dr., 51375 Leverkusen (DE); Melchiors, Martin, Dr., 42799 Leichlingen (DE); Hovestadt, Wieland, Dr., 42799 Leichlingen (DE); Sonntag, Michael, Dr., 51377 Leverkusen (DE); Köhler, Burkhard, Dr., 51373 Leverkusen (DE); Jansen, Bernhard, Dr., 51061 Köln (DE)
(74) Vertreter: BIP Patents

(56) Entgegenhaltungen:
- EP-A- 0 046 190
- EP-A- 0 118 009
- EP-A- 0 238 863
- EP-A- 0 288 763
- EP-A- 0 538 560
- EP-A- 0 553 620
- EP-A- 0 557 844
- EP-A- 0 781 819
- EP-A- 0 783 023
- EP-A- 0 841 352
- EP-A- 0 879 858
- EP-A- 0 899 282
- EP-A- 0 947 557
- WO-A-02/32563
- DE-A- 19 704 714
- DE-A- 19 810 051
- DE-C- 19 530 522
- GB-A- 1 104 403
- US-A- 4 522 968
- US-A- 5 073 585
- US-A- 5 180 425
- US-A- 5 541 261

## Beschreibung

Die Erfindung betrifft Vinylpolymerisat-Sekundärdispersionen mit hoher thermischer Stabilität und geringem Colösergehalt, ein Verfahren zu deren Herstellung und deren Verwendung in Beschichtungsmitteln.

Ein geeignetes Verfahren zur Herstellung von lagerstabilen Poly(meth)acrylatsekundärdispersionen für Bindemittel oder Bindemittelkomponenten in wasserverdünnbaren Beschichtungsmitteln wurde bereits in der EP-A 0 841 352 beschrieben. Dort wird eine Mischung aus ethylenisch ungesättigten Monomeren in einem Gemisch aus organischen Lösungsmitteln, Initiator und Wasser polymerisiert. Das erhaltene Polyacrylatharz wird dann zumindest teilweise neutralisiert und in Wasser dispergiert.

Nachteilig an dem in der EP-A 0 841 352 beschriebenen Verfahren ist, dass die resultierenden wässrig/organischen Dispersionen nicht ausreichend thermostabil sind. Diese unzureichende Thermostabilität zeigt sich im Allgemeinen darin, dass solche Dispersionen instabil sind, wenn sie bei erhöhten Temperaturen von 40°C und darüber gelagert werden. Dies trifft insbesondere dann zu, wenn man unpolare, schlecht wasserlösliche Colösemittel, wie z. B. Solvesso 100 (technisches Gemisch von alkylierten Aromaten) einsetzt oder das bei der Zulaufpolymerisation anfänglich eingesetzte Colösemittel-/Wasserverhältnis unterhalb eines Gew.-Verhältnisses von 40/60 hält.

Andere Herstellverfahren für Sekundärdispersionen sind im Allgemeinen sogenannte "Zweitopfverfahren", wobei in einem ersten Kessel die Polymerisation im homogenen organischen Milieu durchgeführt und in einem zweiten Kessel die Dispergierung in einer wässrigen Phase bei vorheriger oder gleichzeitiger Neutralisation z.B. mittels Aminen erfolgt. Solche Verfahren sind beispielsweise in der EP-A 358 979, der DE-A 198 14 061 und der EP-A 1 024 184 beschrieben. Diese Zweitopfverfahren sind technisch aufwendig, weil zwei Autoklaven zur Herstellung solcher Dispersionen benötigt werden und auch die Überführung der meist hochviskosen Polymerlösung in den Dispergierkessel mit Komplikationen verbunden sein kann. Darüber hinaus kann es auch in der Anfangsstufe der Polymerisation aufgrund der verfahrenstechnisch bedingten geringen Lösungsmittelmenge in der Polymerisationsvorlage zu Problemen mit der Temperaturregelung und dem Rühren des Ansatzes kommen. Daher ist hier die Zugabe eines weiteren Dispergiermediums, im allgemeinen Wasser, neben den organischen Lösungsmittel notwendig.

US 4 522 968, EP 0 879 858, EP 0 781 819, DE 19 810 051, EP 0 557 844, und US 5 541 261 offenbaren Herstellverfahren für Sekundärdispersionen.

Aufgabe der vorliegenden Erfindung bestand nun in der Bereitstellung thermostabiler Vinylpolymerisat-Sekundärdispersionen, die die geschilderten Nachteile des Standes der Technik nicht aufweisen und die nach einem technisch weniger aufwendigen Verfahren hergestellt werden. Außerdem sollten sich die lagerstabilen Sekundärdispersionen als Beschichtungsmittel für praktisch alle beliebigen Substrate, besonders aber für metallische Substrate eignen.

Es wurde nun überraschenderweise gefunden, dass durch die Anwesenheit von geeigneten amphiphilen Oligomeren oder Polymeren mit Block- bzw. Pfropfstruktur in Vinylpolymerisat-Sekundärdispersionen eine ausreichende Thermostabilität erreicht werden kann. Durch die mehrphasig im Colöser-/Wasser-Gemisch und bei Anwesenheit der amphiphilen Verbindungen ablaufende Polymerisation werden Polyoldispersionen erhalten, die auch bei höheren Temperaturen über 40°C lagerstabil sind. Dabei wirken die amphiphilen Verbindungen als stabilisierende Tenside sowohl während der Polymerisation als auch während der Lagerung der auspolymerisierten Dispersionen.

Gegenstand der vorliegenden Erfindung sind thermo- und lagerstabile Vinylpolymerpolyol-Sekundärdispersionen als in Anspruch 1 definiert.

Der lösliche Polymerisatanteil der erfindungsgemäßen Vinylpolymerpolyol-Sekundärdispersionen weist im allgemeinen Molekulargewichte Mₙ (Zahlenmittel) zwischen 1 000 und 20 000 g/mol und Molekulargewichte M_{w} (Gewichtsmittel) zwischen 5 000 und 100 000 g/mol (gemessen gegen Polystyrol-Eichstandards) auf. Die Glastemperaturen, die mittels der DSC-Methode gemessen werden, liegen im allgemeinen in einem Bereich von 0 bis 60°C, bevorzugt von 10 bis 50°C.

Die erfindungsgemäßen Vinylpolymerpolyol-Sekundärdispersionen weisen eine Hydroxylzahl von 15 bis 200, bevorzugt von 30 bis 180 mg KOH/g Feststoff auf. Die Säurezahl liegt im Bereich von 4 bis 55, bevorzugt 8 bis 55, besonders bevorzugt von 12 bis 40 mg KOH/g Feststoff. Die erfindungsgemäßen Dispersionen weisen mittlere Teilchengrößen von 50 bis 250 nm und Festkörpergehalte zwischen 30 und 60 Gew.-%, bevorzugt zwischen 35 und 55 Gew.-% und Viskositäten zwischen 100 und 10 000 mPa•s, bevorzugt zwischen 300 und 5 000 mPa•s (23°C, Schergradient D = 42 s⁻¹) auf. Die pH-Werte der erfindungsgemäßen Dispersionen liegen im Allgemeinen zwischen 5 und 11, bevorzugt zwischen 6 und 10, besonders bevorzugt zwischen 6,5 und 9.

Weiterer Gegenstand der Erfindung ist ein Verfahren zur Herstellung der erfindungsgemäßen Vinylpolymerpolyol-Sekundärdispersionen, dadurch gekennzeichnet, dass zunächst das Vinylpolymerharz A) durch Polymerisation einer Mischung ethylenisch ungesättigter Monomerer a) in Gegenwart eines Initiators b) in einem Wasser-Lösungsmittel-Gemisch unter Zusatz mindestens eines amphiphilen Polymers B) hergestellt wird, anschließend zumindest teilweise neutralisiert und gegebenenfalls nach Zugabe einer weiteren Menge Wasser dispergiert wird und gegebenenfalls Hilfs- und Zusatzmittel C) zugesetzt werden.

Bevorzugt werden im erfindungsgemäßen Verfahren 30 bis 80 Gew.-% einer Mischung ethylenisch ungesättigter Monomerer a) 0,5 bis 8,0 Gew.-% eines Initiators b) in einem Gemisch aus 2 bis 20 Gew.-% eines organischen Lösemittels c) und 10 bis 50 Gew.-% Wasser d) unter Zusatz von 0,1 bis 3,0 Gew.-% eines amphiphilen Polymeren B) polymerisiert, wobei die Summe der Komponenten 100 Gew.-% beträgt.

In einer besonders bevorzugten Ausführungsform des erfindungsgemäßen Verfahrens werden 35 bis 75 Gew.-% einer Mischung ethylenisch ungesättigter Monomerer a) 0,5 bis 8,0 Gew.-% eines Initiators b) in einem Gemisch aus 5 bis 15 Gew.-% eines organischen Lösemittels c) und 15 bis 40 Gew.-% Wasser d) unter Zusatz von 0,15 bis 2,0 Gew.-% eines amphiphilen Polymeren B) polymerisiert, wobei die Summe der Komponenten 100 Gew.-% beträgt.

Der im erfindungsgemäßen Verfahren eingesetzte Initiator b) sollte bevorzugt löslich im organischen Lösungsmittel c), das amphiphile Polymer B) sollte bevorzugt löslich oder dispergierbar im Gemisch aus c) und d) sein.

Bei den Monomeren a) handelt es sich um Gemische aus insbesondere einfach ethylenisch ungesättigten Monomeren, wie Acrylsäure- oder Methacrylsäurealkylester oder -cycloalkylester mit 1 bis 18 Kohlenstoffatomen im Alkyl- bzw. Cycloalkylrest, beispielsweise Methyl-, Ethyl-, n-Propyl-, n-Butyl-, Isopropyl-, Isobutyl-, t-Butyl-, die isomeren Pentyl-, Hexyl-, 2-Ethylhexyl-, Octyl-, Dodecyl-, Hexadecyl- oder beispielsweise Octadecyl- oder Cyclohexyl-, Trimethylcyclohexyl- oder Isobornylester der genannten Säuren, Acetoacetoxyethylmethacrylat, Acrylnitril, Vinylether, Methacrylnitril, Vinylacetat, Styrol oder Vinyltoluol.

Mitverwendet werden außerdem ethylenisch ungesättigte Monomere, die alkoholische Hydroxygruppen tragen, wie beispielsweise Hydroxyalkylester α ,β-ungesättigter Carbonsäuren, insbesondere von Acrylsäure oder Methacrylsäure mit 2 bis 12, bevorzugt 2 bis 6 Kohlenstoffatomen im Hydroxyalkylrest, wie 2-Hydroxyethyl(meth)acrylat, die isomeren, durch Anlagerung von 1 Mol Propylenoxid an 1 Mol (Meth)acrylsäure erhaltenen Hydroxypropyl(meth)acrylate, 2-, 3- und 4-Hydroxybutyl(meth)acrylat, die isomeren Hydroxyhexyl(meth)acrylate. Ebenfalls geeignet sind mit Ethylen-, Propylen- und/oder Butylenoxid modifizierte bzw. kettenverlängerte, hydroxyfunktionelle Monomere eines Molekulargewichts von bis zu 3000 g/mol. Die alkoholische Hydroxygruppen-tragenden Monomere werden dabei in einer solchen Menge im Gemisch A) eingesetzt, dass die OH-Zahl der Polyacrylatsekundärdispersion 15 - 200, bevorzugt 30 - 180 mg KOH/g Feststoff beträgt.

Im Gemisch a) mitverwendet werden außerdem carboxylgruppenhaltige, ungesättigte Monomere, wie beispielsweise Acrylsäure, Methacrylsäure, Maleinsäure, Itaconsäure, Crotonsäure, Halbester der Malein- und Fumarsäure, bevorzugt Acrylsäure oder Methacrylsäure. Die carboxylgruppenhaltigen Monomere werden dabei in einer solchen Menge eingesetzt, die einer Säurezahl der Polyacrylatsekundärdispersion von 4 bis 55, bevorzugt 8 bis 55, besonders bevorzugt 12 bis 40 mg KOH/g Feststoff, entspricht. Ebenso mitverwendet können auch Sulfonsäuregruppen enthaltende Monomere, wie beispielsweise Styrolsulfonsäure und 2-Acrylamido-2-methylpropansulfonsäure. Bevorzugt ist hierbei die Verwendung von Carboxylgruppen enthaltenden Comonomeren.

Die ionischen Gruppen des Vinylpolymerisatharzes A) dienen nach ihrer Neutralisation in erster Linie zur Stabilisierung der wässrig/organischen Dispersion und im Falle von Polyisocyanat-Vemetzern als Katalysatoren für die Reaktion zwischen den Isocyanatgruppen und den Hydroxygruppen des Polyols sowie zur besseren Dispergierung von Pigmenten. Die nicht neutralisierten Carbonsäure- und Sulfonsäuregruppen sind darüber hinaus in der Lage, mit den Isocyanatgruppen des Polyisocyanat-Vernetzers unter Kohlendioxidabspaltung zu Amidstrukturen zu reagieren.

Als Initiatoren b) geeignet sind alle in dem organischen Lösemittel c) löslichen Initiatoren, bevorzugt sind organische Peroxide, wie Dibenzoylperoxid, tert.-Butylperoxypivalat, tert.-Butylperoxy-2-ethylhexanoat, Di-tert-butylperoxid, Didecanoylperoxid, tert.-Butylperoxybenzoat, Dicumylperoxid oder Azoverbindungen, wie z. B. Azodiisobuttersäurenitril. Besonders bevorzugt eingesetzt werden tert.-Butylperoxy-2-ethylhexanoat, tert.-Butylperoxybenzoat oder Di-tert-butylperoxid.

Zur Erzielung des gewünschten Molekulargewichts können Regler wie n-Dodecylmercaptan, t-Dodecylmercaptan oder Mercaptoethanol in Mengen von bis zu 1 Gew.-% mitverwendet werden.

Als amphiphile Polymere B) sind solche Polymeren geeignet, die sowohl hydrophile als auch lipophile Eigenschaften besitzen und bei denen die hydrophilen und die lipophilen Molekülsegmente im selben Molekül getrennt voneinander vorliegen. Ein blockartiger oder kammartiger (pfropfartiger) Aufbau ist bevorzugt.

Als lipophiler, wasserunlöslicher Molekülteil einer solchen amphiphilen Substanz kann im Prinzip jedes Polymerisat aus einem wasserunlöslichen oder schwerlöslichen Monomeren fungieren, wobei der Polymerisationsgrad dieses Molekülbestandteils mindestens bei 2 liegt.

Als hydrophiler, wasserlöslicher Bestandteil dieser amphiphilen Substanz können sowohl nichtionisch, anionisch oder kationisch geladene Molekülteile fungieren, wobei anionisch und nichtionisch modifizierte Polymerspezies bevorzugt sind.

Beispielhaft seien hier Blockpolymere aus ethylenisch ungesättigten, schwer wasserlöslichen Monomeren und sehr gut bis gut wasserlöslichen Ethylenoxid-Sequenzen genannt, wie z. B. Blockpolymere aus Polystyrol und Polyethylenoxid, Blockpolymere aus Polymethylmethacrylat und Polyethylenoxid und Blockpolymere aus Polybutylmethacrylat und Polyethylenoxid; diese Produkte werden z.B. als Versuchsprodukte SE_{xy}, ME_{xy} und BE_{xy} von der Th. Goldschmidt AG, Essen, vertrieben, wobei x und y Molekulargewichtsangaben für die einzelnen Molekülblöcke beinhalten. Die Herstellung der Polymethacrylat/Polyethylenoxid-Blockpolymeren ist in der EP-A 0 613 910 beschrieben.

Möglich sind auch amphiphile Blockpolymere, die durch Kopplung eines hydrophoben (Meth)acrylatblocks mit einer endständigen OH-Gruppe und eines hydrophilen Polyethylenoxidblocks mit ebenfalls einer endständigen OH-Gruppe über ein Diisocyanat entstehen. Die bevorzugten Molgewichte Mₙ der lipophilen Blöcke dieser Blockpolymeren liegen im allgemeinen zwischen 500 und 5000 g/mol und die der hydrophilen Ethylenoxid-Blöcke zwischen 1000 und 6000 g/mol.

Geeignet sind auch Blockpolymere aus einem Butylen/Ethylen-Block als hydrophobem Block und Polyethylenoxid als hydrophilem Block; ein solches Blockpolymerisat wird z. B. von der Firma Tego Chemie Service, Essen, unter der Bezeichnung Tego EBE 55 X vertrieben.

Weiterhin sind Blockpolymere aus einem hydrophoben Vinylpolymerisat-Block und einem hydrophilen Block mit anionischen Gruppen, wie z. B. Carbonsäuregruppen geeignet. Beispielhaft hierfür ist ein amphiphiles Blockpolymer der Firma Th. Goldschmidt, Essen, mit der Bezeichnung Blockpolymer VP MA 1007 genannt, das aus einem hydrophoben Methylmethacrylat-Block mit dem Molgewicht 1000 g/mol und einem hydrophilen Methacrylsäure-Block mit dem Molgewicht 700 g/mol besteht.

Ebenfalls sind Blockpolymere aus einem hydrophoben Polypropylenoxid-Block und einem hydrophilen Polyethylenoxid-Block geeignet, ebenso wie auch solche amphiphile Polymere mit Multiblockaufbau. Beispielhaft hierfür seien Blockpolymere der Firma ICI Surfactants, Großbritanien, mit der Bezeichnung Synperonic PE genannt. Sie weisen Zusammensetzungen von 5 bis 80 % Ethylenoxid und Molgewichte bis 15000 g/mol auf.

Bevorzugt sind amphiphile Polymere B) die ein Blockpolymerisat aus einem Vinylpolymerisat als hydrophobem Block und Polyethylenoxid als hydrophilem Block darstellen. Bevorzugt sind ebenfalls Blockpolymerisate aus einem Vinylpolymerisat als hydrophobem Block und Poly(meth)acrylsäure als hydrophilem Block.

Als Lösemittel c) sind beispielweise Alkohole geeignet, wie z.B. n-Butanol, n-Pentanol, n-Hexanol, Cyclohexanol, Heptanol, Methylglykol, Ethylglykol, Butylglykol, Methoxypropanol, Ethoxypropanol, Butoxypropanol, 1-t-Butoxy-2-propanol, Methyldiglykol, Ethyldiglykol, Butyldiglykol, Glykolsäuremethylester, Glykolsäureethylester, Glykolsäurebutylester, Milchsäuremethylester, Milchsäureethylester, Milchsäurebutylester und Mischungen dieser und anderer Lösungsmittel, wie z.B. N-Methylpyrrolidon, Solvent-Naphtha, Ethylencarbonat, Butylacetat, Xylol, Toluol, Cyclohexan, Diacetonalkohol, Methylisobutylketon, Aceton, sowie Mischungen der genannten Lösungsmittel.

Bevorzugt sind Lösemittel c), die selbst amphiphilen Charakter aufweisen, wobei der lipophile Molekülteil aus einem Kohlenwasserstoffrest mit mindestens 4 C-Atomen und der hydrophile Molekülteil aus einer Oligoethylenglykol- oder einer Oligopropylenglykoleinheit mit einem minimalen Polymerisationsgrad von 1 besteht. Besonders bevorzugt sind Butylglykol, Butoxypropanol, 1-t-Butoxy-2-propanol, Butyldiglykol oder Mischungen dieser Lösemittel.

Die Copolymerisation im erfindungsgemäßen Verfahren wird im allgemeinen bei einer Temperatur von 80 bis 180°C, bevorzugt von 100 bis 170°C, besonders bevorzugt von 110 bis 160°C im Zulaufverfahren durchgeführt. Sie kann sowohl drucklos als auch im geschlossenen Kessel unter Druck erfolgen.

Im allgemeinen werden das Lösemittel c) und das Wasser d) zusammen mit dem amphiphilen Polymeren B) im Reaktionskessel vorgelegt und unter Rühren auf die Polymerisationstemperatur erwärmt.

Die Monomermischung a) und die Initiatorkomponente b), wobei diese bevorzugt in einem Teil der Lösemittelkomponente c) gelöst ist, werden parallel innerhalb von 1 bis 10 Stunden, bevorzugt innerhalb 2 bis 6 Stunden, in die Reaktorvorlage zudosiert. Nach Abschluß der Monomer- und Initiatordosierung kann eine geringe Menge Initiator nachdosiert werden, um den Restmonomergehalt im Polymerisationsansatz zu senken.

Es ist möglich, die Copolymerisation im erfindungsgemäßen Verfahren mehrstufig in der Art durchzuführen, dass das Monomergemisch a) in mehrere Teile unterschiedlicher Zusammensetzung geteilt wird, die nacheinander polymerisiert werden. Nach Abschluß der Copolymerisation liegt der Anteil der Restmonomere im Polymerisationsansatz in der Regel unter 0,1 Gew.-%.

Die Polymerisation kann so z.B. zweistufig durchgeführt werden, indem zunächst eine hydrophobe, wasserunlösliche Monomermischung und daran anschließend eine hydrophile Monomermischung polmerisiert werden. Es besteht auch die Möglichkeit in einem inversen Verfahren zunächst eine hydrophile Monomermischung und anschließend eine hydrophobe, wasserunlösliche Monomermischung zu polymerisieren. Bevorzugt ist das erstgenannte "direkte" Verfahren.

Die Säuregruppen werden durch anorganische Basen, wie z.B. Lithium-, Natriumoder Kaliumhydroxid, durch Ammoniak oder organische Amine neutralisiert. Bevorzugt sind organische Amine, wie N-Methylmorpholin, Trimethylamin, Triethylamin, Methyldiisopropylamin, Tripropylamin, Tributylamin, Dimethylcyclohexylamin, Di-ethanolamin, Triethanolamin, Dimethylisopropanolamin, Methyldiethanolamin, Di-ethylethanolamin, Dimethylethanolamin, Butanolamin, Dibutanolamin, Ethanolamin, Ethylamin, Morpholin sowie Mischungen dieser Neutralisationsmittel, gegebenenfalls mit anderen, auch höhermolekularen Etheroder Estergruppen aufweisenden Aminen. Besonders bevorzugt sind Ammoniak, Triethylamin, Triethanolamin oder Dimethylethanolamin. In der wässrigen Copolymerisatdispersion sind nach der Neutralisation wenigstens 40 % der neutralisationsfähigen Carboxyl- oder Sulfonsäuregruppen durch Salzbildung neutralisiert, bevorzugt sind 70 bis 100%, wobei natürlich auch ein Überschuß an Neutralisationsmittel vorhanden sein kann. Die Neutralisation mit einem primären oder einem sekundären Amin kann vorteilhaft sein, da ein Einbau in das Polyurethannetzwerk stattffinden kann. Das gleiche gilt für den Einsatz von tertiären Aminen, die zusätzlich weitere isocyanatreaktive Gruppen, wie z.B. OH-Gruppen, enthalten. Die Zugabe des Neutralisationsmittels kann alleine oder zusammen mit dem gegebenenfalls noch zuzugebenden Wasser erfolgen.

Die Menge des gegebenenfalls noch zuzugebenden Wassers wird im allgemeinen so gewählt, dass nach der Dispergierung des Polymerisationsansatzes der Festkörpergehalt der Dispersion zwischen 30 und 60 Gew.-%, bevorzugt zwischen 35 und 55 Gew.-%, bei einer Viskosität der Dispersion von 100 bis 10000, bevorzugt von 300 bis 5000 mPa•s (23°C, Schergradient D = 42 s⁻¹) liegt. Das gegebenenfalls noch zuzugebende Wasser kann entweder zum Polymerisationsansatz oder der Polymerisationsansatz zum Wasser gegeben werden.

Als Hilfs- und Zusatzstoffe C) können alle in der Beschichtungstechnologie bekannten Mittel, wie Entschäumer, Verdickungs- und Verlaufsmittel, Katalysatoren, Dispergierhilfs-, Hautverhinderungs-, Antiabsetzmittel, Sikkative oder Emulgatoren zum Einsatz gelangen.

Gegenstand der Erfindung ist auch die Verwendung der erfindungsgemäßen Vinylpolymerpolyol-Sekundärdispersionen als Bindemittel oder Bindemittelkomponente in wasserverdünnbaren Beschichtungsmitteln. Diese Beschichtungsmittel werden als Grundierungen, Füller, pigmentierte oder transparente Decklacke, Klarlacke und Hochglanzlacke, sowie Einschichtlacke in der Einzel- und Serienapplikation, z.B. in der Industrielackierung, der Automobilerst- und Reparaturlackierung eingesetzt.

Ebenfalls Gegenstand der Erfindung sind Beschichtungsmittel, enthaltend die erfindungsgemäßen Vinylpolymerpolyol-Sekundärdispersionen sowie Vernetzer, gegebenenfalls Pigmente sowie gegebenenfalls die in der Lack-Technologie bekannten Hilfs- und Zusatzstoffe.

Als Vernetzerharze eignen sich alle in der Beschichtungstechnologie üblichen Vernetzerharze, die mit Hydroxygruppen bei Raumtemperatur oder erhöhter Temperatur reagieren können, wie beispielsweise Phenolharze, Melaminharze, blockierte oder unblockierte Polyisocyanate. Es können auch Mischungen verschiedener Vernetzerharze eingesetzt werden. Bevorzugt ist der Einsatz von blockierten und/oder unblockierten Polyisocyanaten.

Die erfindungsgemäßen Beschichtungsmittel eignen sich für alle Einsatzgebiete, in denen wasserverdünnbare Beschichtungssysteme mit erhöhtem Eigenschaftsprofil wie z.B. hervorragenden optischen Eigenschaften (Glanzgrad, Haze-Wert und Filmverlauf) Verwendung finden. Geeignete Substrate, die mit den erfindungsgemäßen Beschichtungsmitteln beschichtet, lackiert oder versiegelt werden können, sind beispielsweise mineralische Baustoffoberflächen, Holz und Holzwerkstoffe, metallische Oberflächen, bitumen- oder asphalthaltige Beläge, diverse Kunststoffoberflächen sowie Hochglanzlacke. Bevorzugt sind als Substrate metallische Oberflächen oder Kunststoffoberflächen.

Besonders bevorzugt werden die erfindungsgemäßen, in Wasser dispergiert und/oder gelöst vorliegenden Copolymerisate in Kombination mit unblockierten Polyisocyanaten oder ganz besonders bevorzugt in Kombination mit Mischungen von hydrophilen und hydrophoben Polyisocyanaten eingesetzt. Diese eignen sich insbesondere zur Beschichtung oder zur Lackierung metallischer Oberflächen oder Kunststoffen, wobei die Aushärtung bei Raumtemperatur bis 160°C erfolgen kann. Werden die erfindungsgemäßen Vinylpolymerpolyol-Sekundärdispersionen in Kombination mit Aminovernetzerharzen eingesetzt, eignen sie sich zur Beschichtung oder Lackierung metallischer Oberflächen, wobei die Aushärtung bei 100 bis 180°C erfolgt. Die Applikation der Beschichtungsmittel erfolgt in Form von Einschichtlacken oder als Decklacke.

### Beispiele

Alle Angaben in % beziehen sich auf das Gewicht. In allen Beispielen wurde unter Inertgas (Stickstoff) gearbeitet.

### Beispiel A): Urethangruppenhaltiges amphiphiles Blockpolymer (erfindungsgemäß)

In einem 1 1-Reaktor wird eine Mischung von 284 g Methacrylsäure-n-butylester, 5,6 g 2-Mercaptoethanol und 500 ml Toluol vorgelegt und unter Stickstoff auf eine Innentemperatur von 90°C erwärmt. Innerhalb von 8 Stunden wird zum Reaktorinhalt eine Lösung von 0,5 g Azobisisobutyronitril in 100 ml Toluol gleichmäßig zugetropft. Nach beendeter Polymerisation wird das Lösungsmittel Toluol im Vakuum abdestilliert. Man erhält 253 g eines Polymerisats mit einer OH-Zahl von 14 mg KOH/g und einem Molekulargewicht Mₙ von 4007 g/mol (bestimmt mittels GPC; Styroleichung).

66,7 g dieses monohydroxyfunktionellen Poly-n-Butylmethacrylats werden in 100 g Aceton vorgelegt und homogen gelöst. Hierzu wird die Schmelze eines Isocyanatprepolymeren zugegeben, das aus 500 g Polyethylenglykolmonomethylether (Molekulargewicht: ca. 5000 g/mol; OH-Zahl: 12,1 mg KOH/g; Hersteller: Fluka) und 181 g Hexamethylendiisocyanat bei einer Temperatur von 70°C in der Schmelze hergestellt und auf einem Dünnschichtverdampfer von überschüssigem Diisocyanat befreit wurde. (Der Isocyanatgehalt dieses Prepolymeren beträgt vor dem Einsatz mit dem hydroxylhaltigen Polybutylmethacrylat 1,2 %).

Das Reaktionsgemisch wird unter Rückfluß gerührt, bis im IR-Spektrum keine NCO-Bande mehr zu erkennen ist. Dann wird das Lösungsmittel bis zur Gewichtskonstanz abdestilliert. Das entstandene n-Butylmethacrylat/Ethylenoxid-Blockpolymere ist bei Raumtemperatur sehr hochviskos.

### Beispiel 1: Vinylpolymerisat-Sekundärdispersion (erfindungsgemäß)

In einem 6 1-Polymerisationskessel mit Rührer, zwei Vorlagebehältern mit Dosierpumpen und automatischer Temperatursteuerung werden 11,3 g Blockpolymer VP ME 1030 (Blockpolymerisat aus Polymethylmethacrylat mit einem Molgewicht von 1000 g/mol und Polyethylenoxid mit einem Molgewicht von 3000 g/mol; Th. Goldschmidt AG) zusammen mit einem Gemisch von 331 g n-Butylglykol und 872 g destilliertem Wasser vorgelegt. Der Reaktionskessel wird gründlich mit Stickstoff gespült. Gleichzeitig wird mit einem Ankerrührer mit 200 U/min gerührt. Danach wird der Autoklav verschlossen und auf eine Innentemperatur von 145°C erwärmt. Anschließend wird in dem Vorlagebehälter I eine Monomermischung von 401,5 g 2-Hydroxyethylmethacrylat, 789,5 g Methylmethacrylat und 564 g n-Butylacrylat eingewogen und im Vorlagebehälter II eine Initatormischung von 79 g Di-t-butylperoxid und 67 g n-Butylglykol.

Anschließend wird die Monomermischung aus dem Vorlagebehälter I in 3 Stunden sowie die Initiatormischung aus dem Vorlagebehälter II in 5 Stunden 15 min. gleichmäßig getaucht in den Reaktionskessel dosiert.

Nach Beendigung des Monomerzulaufs wird auch der Initiatorzulauf kurzzeitig unterbrochen (ca. 30 min.) und der Vorlagebehälter I mit einem zweiten Monomergemisch von 162,4 g 2-Hydroxyethylmethacrylat, 115 g Methylmethacrylat, 83,4 g n-Butylacrylat und 60,9 g Acrylsäure gefüllt. Diese zweite Monomermischung wird in 1 Stunde 30 min. in den Reaktionskessel dosiert, während die restliche Initiatorlösung in den noch verbleibenden 2 Stunden 15 min. zudosiert wird.

Nach Beendigung des Initiatorzulaufs wird noch 2 Stunden nachgerührt und anschließend auf 90°C abgekühlt.

Danach wird in 30 min. eine Neutralisationslösung aus 80,2 g N-Dimethylethanolamin in 1252 g destilliertem Wasser in den Autoklav dosiert. Es wird 1 Stunde nachgerührt und währenddessen auf 40°C abgekühlt. Danach wird durch ein Filter der Firma Seitz (T 5500) unter Druck filtriert.

Folgende physikalisch-chemische Kenndaten wurden erhalten:

| | |
|---|---|
| Feststoffgehalt | 47,5 Gew.-% |
| pH-Wert | 8,2 |
| Viskosität bei D = 42,2 s⁻¹ | 1566 mPa•s |
| Säurezahl | 11,6 mg KOH/g Dispersion |
| mittlerer Teilchendurchmesser* | 126 nm |
| Film auf Glasplatte | klar, transparent |

| | |
|---|---|
| (*gemessen mittels Laserkorrelationsspektroskopie, LKS) | |

Mit dieser Polymerisationsdispersion wurde ein Lagerstabilitätstest bei einer Temperatur von 50°C über 4 Wochen durchgeführt. Es wurden folgende Ergebnisse erhalten:

| | 1. Woche | 2. Woche | 4.Woche |
|---|---|---|---|
| pH-Wert: | 7,8 | 7,7 | 7,3 |
| Viskosität (D = 42,2 s⁻¹) [mPa•s] | 840 | 649 | 496 |
| Säurezahl [mg KOH/g Disp.] | 12,4 | 12,7 | 13,1 |
| mittlerer Teilchendurchmesser [nm] | 135 | 146 | 165 |

Man erkennt aus der Tabelle die gute Stabilität dieser erfindungsgemäßen Polymerdispersion bei 50°C.

### Beispiel 2 (Vergleichsbeispiel)

Das erfindungsgemäße Beispiel 1 wird wiederholt, jedoch ohne Zugabe des stabilisierenden Blockpolymeren VP ME 1030.

Es wurden folgende physikalisch-chemische Kenndaten erhalten:

| | |
|---|---|
| Feststoffgehalt | 48,2 Gew.-% |
| pH-Wert | 8,1 |
| Viskosität (D = 42,2 s⁻¹) | 840 mPa•s |
| Säurezahl | 11,6 mg KOH/g Disp. |
| mittlerer Teilchendurchmesser (LKS) | 152 nm |

Beim Lagerstabilitätstest (50°C) wurden folgende Ergebnisse erhalten:

| | 1. Woche | 2. Woche |
|---|---|---|
| pH-Wert | 7,8 | 7,7 |
| Viskosität (D = 42,2 s⁻¹) [mPa•s] | 229 | 112 |
| Säurezahl [mg KOH/g Disp.] | 13,9 | 15,0 |
| Bemerkung | -- | Koagulatbildung |

Nach 3 Wochen ist die Polymerdispersion vollständig koaguliert.

### Beispiel 3: Vinylpolymerisat-Sekundärdispersion (erfindungsgemäß)

Beispiel 1 wird wiederholt, jedoch mit 11,3 g des Blockpolymers VP BE 1030 (Blockpolymer aus einem n-Butylmethacrylat-Block mit einem Molgewicht von 1000 g/mol und einem Ethylenoxid-Block mit einem Molgewicht von 3000 g/mol; Th. Goldschmidt AG, Essen) anstelle des Blockpolymers VP ME 1030.

Folgende physikalisch-chemische Kenndaten wurden erhalten:

| | |
|---|---|
| Feststoffgehalt | 46,4 Gew.-% |
| pH-Wert | 8,0 |
| Viskosität (D = 42,2 s⁻¹) | 1069 mPa•s |
| Säurezahl | 11,7 mg KOH/g Disp. |
| mittlerer Teilchendurchmesser (LKS) | 128 nm |
| Film auf Glasplatte | klar, transparent |

Beim 4wöchigen Lagerstabilitätstest (50°C) wurden folgende Ergebnisse erhalten:

| | 1. Woche | 2. Woche | 4. Woche |
|---|---|---|---|
| pH-Wert | 8,0 | 7,7 | 7,5 |
| Viskosität (D = 42,2 s⁻¹) [mPa•s] | 917 | 830 | 687 |
| Säurezahl [mg KOH/g Disp.] | 12,1 | 12,8 | 12,8 |
| mittlerer Teilchendurchmesser (LKS) [nm] | 142 | 144 | 161 |

Man erkennt die gute Stabilität dieser Polyoldispersion an der vergleichweise geringen Abnahme der Viskosität (- 36 %), des pH-Werts (von 8,0 auf 7,5), der relativ geringen Zunahme des mittleren Teilchendurchmessers (+ 26 %) und der Säurezahl (von 11,7 auf 12,8 mg KOH/g Dispersion) nach 4 Wochen.

### Beispiel 4: Vinylpolymerisat-Sekundärdispersion (erfindungsgemäß)

Beispiel 1 wird wiederholt, jedoch mit 11,3 g des Blockpolymers VP MA 1007 (Blockpolymer aus einem Methylmethacrylat-Block mit einem Molgewicht von 1000 g/mol und einem Methacrylsäure-Block mit einem Molgewicht von 700 g/mol; Th. Goldschmidt AG, Ort) anstelle des Blockpolymers VP ME 1030.

Folgende physikalisch-chemische Kenndaten wurden erhalten:

| | |
|---|---|
| Feststoffgehalt | 48,3 Gew.-% |
| pH-Wert | 7,7 |
| Viskosität (D = 42,2 s⁻¹) | 1680 mPa•s |
| Säurezahl | 12,7 mg KOH/g Disp. |
| mittlerer Teilchendurchmesser (LKS) | 146 nm |
| Film auf Glasplatte | klar, transparent |

Beim 4wöchigen Lagerstabilitätstest (50°C) wurden folgende Ergebnisse erhalten:

| | 1. Woche | 2. Woche | 4. Woche |
|---|---|---|---|
| pH-Wert | 7,6 | 7,5 | 7,2 |
| Viskosität (D = 42,2 s⁻¹) [mPa·s] | 1222 | 1105 | 878 |
| Säurezahl [mg KOH/g Disp.] | 12,9 | 13,5 | 13,7 |
| mittlerer Teilchendurchmesser (LKS) [nm] | 141 | 133 | 166 |

Auch hier erkennt man die relativ gute Stabilität dieser Polymerdispersion an der relativ geringen Abnahme der Viskosität (- 48 %), des pH-Werts (von 7,7 auf 7,2), der relativ geringen Zunahme des mittleren Teilchendurchmessers (+ 13,7 %) und der Säurezahl (von 12,7 auf 13,7 mg KOH/g Disp.) nach 4 Wochen.

### Beispiel 5: Vinylpolymerisat-Sekundärdispersion (erfindungsgemäß)

Beispiel 3 wird wiederholt, jedoch mit 146 g Triethanolamin als Neutralisationsmittel anstelle von N-Dimethylethanolamin.

Folgende physikalisch-chemische Kenndaten wurden erhalten:

| | |
|---|---|
| Feststoffgehalt | 44,4 Gew.-% |
| pH-Wert | 7,4 |
| Viskosität (D = 42,2 s⁻¹) | 802 mPa•s |
| Säurezahl | 11,1 mg KOH/g Disp. |
| mittlerer Teilchendurchmesser (LKS) | 159 nm |
| Film auf Glasplatte | klar, transparent |

Beim 4wöchigen Lagerstabilitätstest (50°C) wurden folgende Ergebnisse erhalten:

| | 1. Woche | 2. Woche | 4. Woche |
|---|---|---|---|
| pH-Wert | 7,3 | 7,3 | 7,5 |
| Viskosität (D = 42,2 s⁻¹) [mPa•s] | 955 | 1489 | 840 |
| Säurezahl [mg KOH/g Disp.] | 12,0 | 12,2 | 12,4 |
| mittlerer Teilchendurchmesser (LKS) [nm] | 171 | 172 | 184 |

Hier erkennt man die exzellente Stabilität dieser Polymerdispersionan der relativ geringen Änderung der Viskosität (+ 4,7 %), des pH-Werts (von 7,4 auf 7,5), der mittleren Teilchengröße (+ 15,7 %) und der Säurezahl (von 11,1 auf 12,4 mg KOH/g Dispersion) nach 4 Wochen.

### Beispiel 6: Vinylpolymerisat-Sekundärdispersion (erfindungsgemäß)

Beispiel 1 wird wiederholt, jedoch mit 22,6 g einer 55 %igen Lösung (in Xylol) des Blockpolymeren Tego® EBE 55 X (Blockpolymer aus einem Ethylen-Butylen-Block und einem Ethylenoxid-Block mit Molekulargewichten Mₙ von ca. 4000 g/mol sowohl des hydophoben als auch des hydrophilen Blocks; Tego Chemie, Essen) anstelle des Blockpolymers VP ME 1030.

Folgende physikalisch-chemische Kenndaten wurden erhalten:

| | |
|---|---|
| Feststoffgehalt | 45,4 Gew.-% |
| pH-Wert | 8,5 |
| Viskosität (D = 42,2 s⁻¹) | 1260 mPa•s |
| Säurezahl | 12,9 mg KOH/g Disp. |
| mittlerer Teilchendurchmesser (LKS) | 118 nm |
| Film auf Glasplatte | klar, transparent |

Beim 4wöchigen Lagerstabilitätstest (50°C) wurden folgende Ergebnisse erhalten:

| | 1. Woche | 2. Woche | 4. Woche |
|---|---|---|---|
| pH-Wert | 8,2 | 8,0 | 7,8 |
| Viskosität (D = 42,2 s⁻¹) [mPa•s] | 955 | 840 | 650 |
| Säurezahl [mg KOH/g Disp.] | 12,6 | 12,9 | 13,2 |
| mittlerer Teilchendurchmesser (LKS) [nm] | 122 | 122 | 136 |

Auch hier erkennt man die befriedigende Stabilität dieser Polymerdispersion an der relativ geringen Änderung des pH-Werts (von 8,5 auf 7,8), der Viskosität (- 48,4 %), des mittleren Teilchendurchmessers (+ 15,3 %) und der Säurezahl (von 12,9 auf 13,2 mg KOH/g Disp.) nach 4 Wochen.

### Beispiel 7: Vinylpolymerisat-Sekundärdispersion; inverses Verfahren (erfindungsgemäß)

In einem 6 1-Polymerisationskessel mit Rührer, zwei Vorlagebehältern mit Dosierpumpen und automatischer Temperatursteuerung werden 11,3 g Blockpolymer VP ME 1030 zusammen mit einem Gemisch von 331 g n-Butylglykol und 872 g destilliertem Wasser vorgelegt. Der Reaktionskessel wird gründlich mit Stickstoff gespült, und gleichzeitig wird mit einem Ankerrührer mit 200 U/min. gerührt. Danach wird der Kessel verschlossen und auf eine Innentemperatur von 145°C erwärmt. Anschließend wird in dem Vorlagebehälter I eine ("hydrophile") Monomermischung von 162,4 g 2-Hydroxyethylmethacrylat, 115 g Methylmethacrylat, 83,4 g n-Butylacrylat und 60,9 g Acrylsäure eingewogen und im Vorratsbehälter II eine Initiatormischung von 79 g Di-t-butylperoxid und 67 g n-Butylglykol.

Anschließend wird die Monomermischung aus dem Vorlagebehälter I in 1 Stunde 30 min. sowie die Initiatormischung aus dem Vorlagebehälter II in 5 Stunden 15 min. gleichmäßig getaucht in den Reaktionskessel dosiert.

Nach Beendigung des Monomerzulaufs wird auch der Initatorzulauf kurzzeitig unterbrochen (ca. 30 min.) und der Vorlagebehälter I mit einem zweiten ("hydrophoben") Monomergemisch von 401,5 g 2-Hydroxyethylmethacrylat, 789,5 g Methylmethacrylat und 564 g n-Butylacrylat gefüllt. Diese zweite Monomermischung wird in 3 Stunden in den Reaktionskessel dosiert, während die restliche Initatorlösung in den noch verbleibenden 3 Stunden 45 min. zudosiert wird.

Nach Beendigung des Initiatorzulaufs wird noch 2 Stunden nachgerührt und anschließend auf 90°C abgekühlt.

Danach wird in ca. 30 min. eine Neutralisationslösung von 75,2 g N-Dimethylethanolamin in 1802 g destilliertem Wasser in den Autoklav dosiert. Es wird 1 Stunde nachgerührt und währenddessen auf 40°C abgekühlt. Danach wird durch ein Filter der Firma Seitz (T 5500) unter Druck filtriert.

Folgende physikalisch-chemische Kenndaten wurden erhalten:

| | |
|---|---|
| Feststoffgehalt | 41,6 Gew.-% |
| pH-Wert | 8,0 |
| Viskosität (D = 42,2 s⁻¹) | 1337 mPa•s |
| Säurezahl | 11,7 mg KOH/g Disp. |
| mittlerer Teilchendurchmesser (LKS) | 151 nm |

Mit dieser Polymerdispersion wurde ein 4wöchiger Lagerstabilitätstest bei einer Temperatur von 50°C durchgeführt. Es wurden folgende Ergebnisse erhalten:

| | 1. Woche | 2. Woche | 4. Woche |
|---|---|---|---|
| pH-Wert | 7,9 | 7,6 | 7,5 |
| Viskosität (D = 42,2 s⁻¹) [mPa•s] | 916 | 840 | 802 |
| Säurezahl [mg KOH/g Disp.] | 11,2 | 11,3 | 11,9 |
| mittlerer Teilchendurchmesser (LKS) [nm] | 153 | 153 | 157 |

Auch hier erkennt man die hervorragende Stabilität dieser Polymerdispersion an der relativ geringen Änderung des pH-Werts (von 8,0 auf 7,5), der Viskosität (- 40,0 %), des mittleren Teilchendurchmessers (+ 3,8 %) und der Säurezahl (von 11,7 auf 11,9 mg KOH/g Disp.) in 4 Wochen.

### Beispiel 8: Vinylpolymerisat-Sekundärdispersion (erfindungsgemäß)

Beispiel 1 wird wiederholt, jedoch mit 22,6 g des Blockpolymers aus Beispiel A) anstelle des Blockpolymers VP ME 1030.

Folgende physikalisch chemische Kenndaten wurden erhalten:

| | |
|---|---|
| Feststoffgehalt | 44,5 Gew.-% |
| pH-Wert | 8,0 |
| Viskosität (D = 42,2 s⁻¹) | 993 mPa•s |
| Säurezahl | 12,7 mg KOH/g Disp. |
| mittlerer Teilchendurchmesser (LKS) | 161 nm |

Beim 3wöchigen Lagerstabilitätstest (50°C) wurden folgende Ergebnisse erhalten:

| | 1. Woche | 2. Woche | 3. Woche |
|---|---|---|---|
| pH-Wert | 7,6 | 7,4 | 7,4 |
| Viskosität (D= 42,2 s⁻¹) (mPa•s): | 773 | 612 | 305 |
| Säurezahl (mg KOH/g Disp.): | 12,5 | 13,0 | 13,6 |
| mittlerer Teilchendurchmesser (LKS) (nm): | 177 | 183 | 185 |

Man erkennt aus der Tabelle die gute Stabilität dieser erfindungsgemäßen Polymerdispersion nach 3wöchiger Lagerung bei 50°C.

### Beispiel 9: Vinylpolymerisat-Sekundärdispersion (erfindungsgemäß)

In einem 6 1-Polymerisationskessel mit Rührer, zwei Vorlagebehältern mit Dosierpumpen und automatischer Temperatursteuerung werden 22,6 g einer 55%igen Lösung des Blockpolymeren Tego® EBE 55 X (Tego Chemie, Essen) zusammen mit einem Gemisch von 325 g n-Butylglykol und 855 g destilliertem Wasser vorgelegt. Der Reaktionskessel wird gründlich mit Stickstoff gespült, und gleichzeitig wird mit 200 U/min. gerührt. Danach wird der Kessel verschlossen und auf eine Innentemperatur von 145°C erwärmt. Anschließend wird in dem Vorlagebehälter I eine ("hydrophobe") Monomermischung von 485,7 g 2-Hydroxyethylmethacrylat, 204,8 g Methylmethacrylat, 111,7 g Styrol, 73,8 g n-Butylacrylat, 288,4 g n-Butyl-methacrylat und 261,9 g Isobornylacrylat eingewogen und im Vorratsbehälter II eine Initiatormischung von 71,1 g Di-t-butylperoxid und 33 g n-Butylglykol.

Anschließend wird die Monomermischung aus dem Vorlagebehälter I in 3 Stunden sowie die Initiatormischung aus dem Vorratsbehälter II in 5 Stunden 15 min. gleichmäßig getaucht in den Reaktionskessel dosiert.

Nach Beendigung des Monomerzulaufs wird auch der Initiatorzulauf kurzzeitig unterbrochen (ca. 30 min.) und der Vorlagebehälter I mit einem zweiten ("hydrophilen") Monomergemisch von 143,6 g Methylmethacrylat, 121,4 g n-Butylacrylat und 54,8 g Acrylsäure gefüllt. Diese zweite Monomermischung wird in 1 Stunde 30 min. in den Reaktionskessel dosiert, während die restliche Initiatorlösung in den noch verbleibenden 2 Stunden 15 min. zudosiert wird.

Nach der Beendigung des Initiatorzulaufs wird nach 2 Stunden nachgerührt und anschließend auf 90°C abgekühlt.

Danach wird in ca. 30 min. eine Neutralisationslösung von 67,7 g N-Dimethylethanolamin in 1830 g destilliertem Wasser in den Autoklav dosiert. Es wird 1 Stunde nachgerührt und währenddessen auf 40°C abgekühlt. Danach wird durch ein Filter der Firma Seitz (T 5500) unter Druck filtriert.

Folgende physikalisch-chemische Kenndaten wurden erhalten:

| | |
|---|---|
| Feststoffgehalt | 39,9 Gew.-% |
| pH-Wert | 7,6 |
| Viskosität (D = 42,2 s⁻¹) | 611 mPa•s |
| Säurezahl | 12,1 mg KOH/g Disp. |
| mittlerer Teilchendurchmesser (LKS) | 128 nm |

Mit dieser Polymerdispersion wurde ein einwöchiger Lagerstabilitätstest bei einer Temperatur von 50°C durchgeführt. Es wurden folgende Ergebnisse erhalten:

| | |
|---|---|
| pH-Wert | 7,3 |
| Viskosität (D = 42,2 s⁻¹) | 382 mPa•s (- 37,5 %) |
| Säurezahl [mg KOH/g Disp.] | 11,7 mg KOH/g Disp. |
| mittlerer Teilchendurchmesser (LKS) | 149 nm (+ 16,4 %) |

Die Stabilität dieser Dispersion ist zufriedenstellend, wie man bei Vergleich der physikalisch-chemischen Kenndaten vor und nach dem Stabilitätstest erkennen kann.

### Beispiel 10: Vergleichsbeispiel

Polyacrylatdispersion gemäß der EP-A 0 358 979 (Sekundärdispersion Bayhydrol® VP LS 2235/1, Bayer AG, Leverkusen) auf der Basis folgender Comonomerer: Methacrylsäure-2-hydroxyethylester, Acrylsäure, Methacrylsäuremethylester und Acrylsäure-n-butylester, mit einem Feststoffgehalt von ca. 46 Gew.-%, einem OH-Gehalt von 3,3 Gew.-% bezüglich Festharz, einer Säurezahl von 21 mg KOH/g Festharz, einem pH-Wert von 8,0 und einer Viskosität von 800 mPa•s (23°C, gemessen in einem Rotationsviskosimeter der Firma Haake bei einem Schergefälle von D = 40 s⁻¹); Neutralisationsmittel: N-Dimethylaminoethanol.

### Polyisocyanat 1 (gemäß der DE 19 822 891; Bayhydur® VP LS 2319, Bayer AG, Leverkusen)

Isocyanuratgruppen- und Allophanatgruppen enthaltendes Polyisocyanat auf der Basis von 1,6-Diisocyanatohexan, das zusätzlich mit Polyethergruppen hydrophiliert ist; Isocyanatgehalt: 18,1 Gew.-%; Funktionalität: 3,8; Viskosität: ca. 4000 mPa•s bei einem Schergradienten D = 40 s⁻¹.

### Anwendunestechnischer Teil

Es werden hierbei zwei wässrige 2K-PUR-Systeme formuliert und deren anwendungstechnisches Verhalten während der Standzeit und der Filmbildung vergleichend beurteilt.

Es werden unabhängig voneinander die in der folgenden Tabelle angegebenen Komponenten 1 und 2 vorgemischt. Die Zahlenangaben entsprechen Gewichtsanteilen in g.

**Tabelle 1**

| Komponente 1 | **Gew.-Anteil [g]** | **Gew.-Anteil [g]** |
|---|---|---|
| Polyoldispersion Beispiel 4 | 54,02 | --- |
| Polyoldispersion Beispiel 10 (Vergleichsbeispiel) | --- | 52,75 |
| Surfynol® 104 (50 %ig in Butylglykol, AIR PRODUCTS Europe B.V., NL) | 1,31 | 1,22 |
| Borchigel® PW 25 (25 %ig in Propylenglykol/Wasser, BORCHERS, DE) | 0,17 | 0,16 |
| Baysilone® VP AI 3468:3466, 3:7 (10 %ig in Methoxy-butylacetat, BAYER AG, Leverkusen, DE) | 0,78 | 0,75 |

| Komponente 2 | | |
|---|---|---|
| Polysocyanat 1 | 17,67 | 16,35 |
| Methoxybutylacetat | 4,43 | 4,10 |

| Komponente 3 | | |
|---|---|---|
| Entionisiertes Wasser | 21,61 | 24,67 |

Anschließend werden die Komponenten 1 und 2 mit einem Dissolver 1 min. lang bei ca. 200 U/min dispergiert. Dann wird mit der Komponente 3 soweit verdünnt, dass eine Auslaufzeit von ca. 22 bis 25 s nach DIN 4 resultiert.

Während der Standzeit (pot life) werden die in der fogenden Tabelle aufgelisteten Viskositäten in Form von Auslaufzeiten nach DIN 4 sowie die folgenden pH-Werte gemessen.

**Tabelle 2**

| **2K-System** | **Polyol (Beispiel 4)/Polyisocyanat 1** | **Polyol (Beispiel 10)/Polyisocyanat 1** |
|---|---|---|
| Standzeit | Viskosität (DIN 4, s)/pH | |
| 0 h | 25/7,8 | 22/7,6 |
| 1 h | 20/7,6 | 20/7,6 |
| 2 h | 20/7,3 | 22/7,4 |
| 3 h | 22/7,1 | 28/7,3 |

Direkt nach der Mischung der Komponenten 1-3 werden Filme auf Glasplatten appliziert und die in der folgenden Tabelle aufgelisteten anwendungstechnischen Daten gemessen.

**Tabelle 3**

| **2K-System** | **Polyol (Beispiel 4)/Polyisocyanat 1** | **Polyol (Beispiel 10)/Polyisocyanat 1** |
|---|---|---|
| Trocknung nach 30', 60°C | deutlich klebend | deutlich klebend |
| Trocknung nach 30', 60°C + 2h 23°C | klebfrei | klebfrei |
| Trocknung gemäß DIN 53150 | | |
| T1 (Sandtrocken) | 1,5 h | 1,5 h |
| T3 (200g Grifftrocken) | > 7 h | < 7 h |
| **Härteentwicklung** während der Filmbildung nach DIN 53157 (Pendelhärte in s) | | |
| 0 h | 17 | 36 |
| +1d, 23°C | 90 | 96 |
| +7d, 23°C | 167 | 160 |
| +16h,50°C | 161 | 169 |
| bei Schichtdicke (µm) | (45) | (50) |
| Prüfung im folgenden Lackaufbau: KTL + konventioneller Basislack, 3 Spritzgänge im Keil mit 10' Zwischenablüften (waagerecht) + 20' Endablüften + 30', 60°C | | |
| Bestimmung der **Lösemittelbeständigkeit** durch Auflage folgender Prüfmittel: | | |
| 1h Wasser / 5' Superbenzin / 5' Methoxypropylacetat / 5' Xylol | Benotung* | |
| 0h | 4455 | 4445 |
| + 1d, 23°C | 3234 | 2233 |
| + 7d, 23°C | 2111 | 1111 |
| +16 h, 50°C | 1111 | 1111 |
| 1h alkalischer**- /1h saurer Reiniger*** | Benotung* | |
| nach 7d 23°C | 0/0 | 0/0 |
| **Technische Daten** | | |
| Glanzgrad 20° DIN 67530 | 83 | 86 |
| Glanz visuell | sehr gut | sehr gut |
| Haze DIN 67530 | 24 | 30 |
| Verlauf visuell | gut | befriedigend |
| bei Schichtdicke (µm) | (50) | (60) |

| | | |
|---|---|---|
| * Benotung der Lackoberfläche nach Beanspruchung: 5 = zerstört, 4 = stark verändert, 3 = deutlich verändert, 2 = gering verändert, 1 = Spur verändert, 0 = unverändert | | |
| ** 2%ige Natronlauge in demin. Wasser | | |
| *** 2%ige Schwefelsäure in demin. Wasser | | |

Auffällig bei der 2K-PUR-Kombination Polyol 4/Polyisocyanat 1 ist insbesondere die längere Stand- bzw. Verarbeitungszeit im Vergleich zur 2K-PUR-Kombination Polyol 10/Polyisocyanat 1, was sich in einem langsameren Viskositätsanstieg (gemessen als Auslaufzeiten) zeigt, sowie der niedrigere Haze-Wert und insbesondere der bessere Verlauf während der Filmbildung.

## Patentansprüche

1. Thermo- und lagerstabile Vinylpolymerpolyol-Sekundärdispersionen enthaltend
A) mindestens ein Vinylpolymerharz mit funktionellen Gruppen, ausgewählt aus der Gruppe der Hydroxyl-, Carboxyl- und Sulfonsäure-Gruppen sowie Mischungen dieser Gruppen, dispergiert in einem Wasser-LösungsmittelGemisch unter Anwesenheit eines Neutralisationsmittels, und
B) mindestens ein amphiphiles Polymer, aufgebaut aus einem hydrophoben und einem hydrophilen Segment, sowie
C) gegebenenfalls Hilfs- und Zusatzmittel; **dadurch gekennzeichnet, dass** das Vinylpolymerharz A) Hydroxylgruppen tragende Monomere sowie carboxylgruppenhaltige, ungesättigte Monomere in einer solchen Menge enthält, dass die OH-Zahl 15 - 200 mg KOH/g Feststoff und die Säurezahl 8 bis 55 mg KOH/g Feststoff, bezogen auf die Sekundärdispersion, beträgt.

2. Vinylpolymerpolyol-Sekundärdispersionen gemäß Anspruch 1, **dadurch gekennzeichnet, dass** der Festkörpergehalt der Dispersion zwischen 30 und 60 Gew.-%, bei einer Viskosität der Dispersion von 100 bis 10 000 mPa•s (23°C, Schergradient D = 42 s⁻¹) liegt.

3. Vinylpolymerpolyol-Sekundärdispersionen gemäß Anspruch 1, **dadurch gekennzeichnet, dass** die amphiphilen Polymere B) sowohl hydrophile als auch lipophile Eigenschaften besitzen und hydrophile und lipophile Molekülsegmente im selben Molekül getrennt voneinander vorliegen.

4. Vinylpolymerpolyol-Sekundärdispersionen gemäß Anspruch 1, **dadurch gekennzeichnet, dass** die amphiphilen Polymere B) Blockpolymerisate aus einem Vinylpolymerisat als hydrophobem Block und Polyethylenoxid als hydrophilem Block darstellen.

5. Vinylpolymerpolyol-Sekundärdispersionen gemäß Anspruch 1, **dadurch gekennzeichnet, dass** die amphiphilen Polymere B) Blockpolymerisate aus einem Vinylpolymerisat als hydrophobem Block und Poly(meth)acrylsäure als hydrophilem Block darstellen.

6. Verfahren zur Herstellung von Vinylpolymerpolyol-Sekundärdispersionen gemäß Anspruch 1, **dadurch gekennzeichnet, dass** zunächst das Vinylpolymerharz A) durch Polymerisation einer Mischung ethylenisch ungesättigter Monomerer a) in Gegenwart eines Initiators b) in einem Wasser-Lösungsmittel-Gemisch unter Zusatz mindestens eines amphiphilen Polymers B) hergestellt wird, anschließend zumindest teilweise neutralisiert und gegebenenfalls nach Zugabe einer weiteren Menge Wasser dispergiert wird und gegebenenfalls Hilfs- und Zusatzmittel C) zugesetzt werden.

7. Verfahren gemäß Anspruch 6, **dadurch gekennzeichnet, dass** 30 bis 80 Gew.-% einer Mischung ethylenisch ungesättigter Monomerer a) 0,5 bis 8,0 Gew.-% eines Initiators b) in einem Gemisch aus 2 bis 20 Gew.-% eines organischen Lösemittels c) und 10 bis 50 Gew.-% Wasser d) unter Zusatz von 0,1 bis 3,0 Gew.-% eines amphiphilen Polymeren B) polymerisiert werden, wobei die Summe der Komponenten 100 Gew.-% beträgt.

8. Verfahren gemäß Anspruch 6, **dadurch gekennzeichnet, dass** 35 bis 75 Gew.-% einer Mischung ethylenisch ungesättigter Monomerer a) 0,5 bis 8,0 Gew.-% eines Initiators b) in einem Gemisch aus 5 bis 15 Gew.-% eines organischen Lösemittels c) und 15 bis 40 Gew.-% Wasser d) unter Zusatz von 0,15 bis 2,0 Gew.-% eines amphiphilen Polymeren B) polymerisiert werden, wobei die Summe der Komponenten 100 Gew.-% beträgt.

9. Verwendung der Vinylpolymerpolyol-Sekundärdispersionen gemäß Anspruch 1 als Bindemittel oder Bindemittelkomponente in wasserverdünnbaren Beschichtungsmitteln.

10. Beschichtungsmittel enthaltend Vinylpolymerpolyol-Sekundärdispersionen gemäß Anspruch 1 sowie Vernetzer, gegebenenfalls Pigmente sowie gegebenenfalls Hilfs- und Zusatzstoffe.

11. Verwendung der Beschichtungsmittel gemäß Anspruch 10 zur Beschichtung, Lackierung oder Versiegelung von Substraten.

12. Verwendung der Beschichtungsmittel gemäß Anspruch 11, **dadurch gekennzeichnet, dass** die Substrate metallische Oberflächen oder Kunststoffoberflächen sind.

13. Substrate beschichtet mit Beschichtungsmittel gemäß Anspruch 10.

## Claims

1. Thermally stable and storage stable vinyl polymer polyol secondary dispersions comprising
A) at least one vinyl polymer resin which comprises functional groups selected from the group of hydroxy, carboxyl and sulphonic acid groups and mixtures thereof and is dispersed in a water/solvent mixture in the presence of a neutralization agent, and
B) at least one amphiphilic polymer synthesized from one hydrophobic segment and one hydrophilic segment, and
C) optionally assistants and or additives; **characterized in that** the vinyl polymer resin A) comprises hydroxy group-bearing monomers and carboxyl group-containing unsaturated monomers in an amount such that the OH number is 15-200 mg of KOH/g of solid and the acid number is from 8 to 55 mg of KOH/g of solid based on the secondary dispersion.

2. Vinyl polymer polyol secondary dispersions according to Claim 1, **characterized in that** the dispersion solids content is between 30 and 60 wt% at a dispersion viscosity of from 100 to 10 000 mPa·s (23°C, shear gradient D = 42 s⁻¹) .

3. Vinyl polymer polyol secondary dispersions according to Claim 1, **characterized in that** the amphiphilic polymers B) possess both hydrophilic and lipophilic properties and hydrophilic and lipophilic molecular segments are disposed apart from one another in the same molecule.

4. Vinyl polymer polyol secondary dispersions according to Claim 1, **characterized in that** the amphiphilic polymers B) are block polymers of a vinyl polymer as hydrophobic block and polyethylene oxide as hydrophilic block.

5. Vinyl polymer polyol secondary dispersions according to Claim 1, **characterized in that** the amphiphilic polymers B) are block polymers of a vinyl polymer as hydrophobic block and poly(meth)acrylic acid as hydrophilic block.

6. Process for preparing vinyl polymer polyol secondary dispersions according to Claim 1, **characterized in that** it comprises initially preparing the vinyl polymer resin A) by polymerizing a mixture of ethylenically unsaturated monomers a) in the presence of an initiator b) in a water/solvent mixture with addition of at least one amphiphilic polymer B), subsequently neutralizing the resulting mixture at least to an extent, optionally dispersing the mixture after addition of a further amount of water and optionally adding assistants and additives C).

7. Process according to Claim 6, **characterized in that** it comprises polymerizing from 30 to 80 wt% of a mixture of ethylenically unsaturated monomers a), from 0.5 to 8.0 wt% of an initiator b) in a mixture of from 2 to 20 wt% of an organic solvent c) and from 10 to 50 wt% of water d) with addition of from 0.1 to 3.0 wt% of an amphiphilic polymer B), wherein the components sum to 100 wt%.

8. Process according to Claim 6, **characterized in that** it comprises polymerizing from 35 to 75 wt% of a mixture of ethylenically unsaturated monomers a), from 0.5 to 8.0 wt% of an initiator b) in a mixture of from 5 to 15 wt% of an organic solvent c) and from 15 to 40 wt% of water d) with addition of from 0.15 to 2.0 wt% of an amphiphilic polymer B), wherein the components sum to 100 wt%.

9. The use of the vinyl polymer polyol secondary dispersions according to Claim 1 as binder or binder component in water-thinnable coating compositions.

10. Coating composition comprising vinyl polymer polyol secondary dispersions according to Claim 1 and crosslinkers, optionally pigments and optionally assistants and additives.

11. The use of the coating compositions according to Claim 10 for coating, lacquering or sealing substrates.

12. The use of the coating compositions according to Claim 11, **characterized in that** the substrates are metallic surfaces or plastics surfaces.

13. Substrates coated with coating composition according to Claim 10.

## Revendications

1. Dispersions secondaires de polymère de vinyle-polyol thermiquement stables et stables à l'entreposage, contenant
A) au moins une résine de polymère de vinyle présentant des groupes fonctionnels choisis dans le groupe des groupes hydroxyle, carboxyle et acide sulfonique ainsi que des mélanges de ces groupes, dispersée dans un mélange eau-solvant en présence d'un agent de neutralisation et
B) au moins un polymère amphiphile, formé d'un segment hydrophobe et d'un segment hydrophile, ainsi que
C) le cas échéant des adjuvants et des additifs ;
**caractérisées**
**en ce que** la résine de polymère de vinyle A) contient des monomères portant des groupes hydroxyle ainsi que des monomères insaturés contenant des groupes carboxyle en une quantité telle que l'indice d'OH est de 15-200 mg de KOH/g de solide et l'indice d'acide est de 8 à 55 mg de KOH/g de solide, par rapport à la dispersion secondaire.

2. Dispersions secondaires de polymère de vinyle-polyol selon la revendication 1, **caractérisées en ce que** la teneur en solides de la dispersion est située entre 30 et 60% en poids, à une viscosité de la dispersion de 100 à 10 000 mPa.s (23°C, gradient de cisaillement D = 42 s⁻¹) .

3. Dispersions secondaires de polymère de vinyle-polyol selon la revendication 1, **caractérisées en ce que** les polymères amphiphiles B) présentent des propriétés tant hydrophiles que lipophiles et des segments moléculaires hydrophiles et lipophiles se trouvent séparément les uns des autres dans la même molécule.

4. Dispersions secondaires de polymère de vinyle-polyol selon la revendication 1, **caractérisées en ce que** les polymères amphiphiles B) sont des polymères à blocs d'un polymère de vinyle comme bloc hydrophobe et de poly(oxyde d'éthylène) comme bloc hydrophile.

5. Dispersions secondaires de polymère de vinyle-polyol selon la revendication 1, **caractérisées en ce que** les polymères amphiphiles B) sont des polymères à blocs d'un polymère de vinyle comme bloc hydrophobe et de poly(acide (méth)acrylique) comme bloc hydrophile.

6. Procédé pour la préparation de dispersions secondaires de polymère de vinyle-polyol selon la revendication 1, **caractérisé en ce qu'**on prépare d'abord la résine de polymère de vinyle A) par polymérisation d'un mélange de monomères éthyléniquement insaturés a) en présence d'un initiateur b) dans un mélange eau-solvant avec addition d'au moins un polymère amphiphile B), ensuite on neutralise au moins partiellement et on disperse le cas échéant après addition d'une autre quantité d'eau et on ajoute le cas échéant des adjuvants et des additifs C).

7. Procédé selon la revendication 6, **caractérisé en ce qu'**on polymérise 30 à 80% en poids d'un mélange de monomères éthyléniquement insaturés a) 0,5 à 8,0% en poids d'un initiateur b) dans un mélange de 2 à 20% en poids d'un solvant organique c) et de 10 à 50% en poids d'eau d) avec addition de 0,1 à 3,0% en poids d'un polymère amphiphile B), la somme des composants valant 100% en poids.

8. Procédé selon la revendication 6, **caractérisé en ce qu'**on polymérise 35 à 75% en poids d'un mélange de monomères éthyléniquement insaturés a) 0,5 à 8,0% en poids d'un initiateur b) dans un mélange de 5 à 15% en poids d'un solvant organique c) et de 15 à 40% en poids d'eau d) avec addition de 0,15 à 2,0% en poids d'un polymère amphiphile B), la somme des composants valant 100% en poids.

9. Utilisation des dispersions secondaires de polymère de vinyle-polyol selon la revendication 1 comme liant ou composant de liant dans des agents de revêtement diluables à l'eau.

10. Agent de revêtement contenant des dispersions de polymère de vinyle-polyol selon la revendication 1 ainsi que des réticulants, le cas échéant des pigments ainsi que le cas échéant des adjuvants et des additifs.

11. Utilisation de l'agent de revêtement selon la revendication 10 pour le revêtement, le laquage ou la vitrification de substrats.

12. Utilisation de l'agent de revêtement selon la revendication 11, **caractérisée en ce que** les substrats sont des surfaces métalliques ou des surfaces en matériau synthétique.

13. Substrats revêtus par l'agent de revêtement selon la revendication 10.
